# EUROPÄISCHE PATENTSCHRIFT

(11) **EP 0 771 859 B1**
(45) Veröffentlichungstag und Bekanntmachung des Hinweises auf die Patenterteilung: **08.12.1999**
(21) Anmeldenummer: 96115356.6
(22) Anmeldetag: 25.09.1996
(51) Int. Cl.: C09D 7/00, G08G 1/017, G06K 19/18

(54) **Lackierung für einen Gegenstand**
Lacquering for objects
Application de peintures à un objet

(30) Priorität: 05.11.1995 DE 19541027
(43) Veröffentlichungstag der Anmeldung: 07.05.1997
(73) Patentinhaber: DaimlerChrysler AG, 70567 Stuttgart (DE)
(72) Erfinder: Dannenhauer, Fritz, Dr., 79686 Hasel (DE); Holdik, Karl, Dr., 89081 Ulm (DE)

(56) Entgegenhaltungen:
- EP-A- 0 649 124
- DE-A- 3 445 401

## Beschreibung

Die Erfindung betrifft eine Lackierung für einen Gegenstand gemäß dem Oberbegriff des Anspruchs 1 sowie ein Verfahren zur Herstellung der Lackierung nach dem Oberbegriff des Anspruchs 9, wie beides aus der gattungsbildend zugrundegelegten DE 34 45 301 A1 als bekannt hervorgeht.

Aus der DE 34 45 401 A1 ist eine Kennzeichnung für Kraftfahrzeuge bekannt, bei der bei einer mehrschichtigen Lackierung unter einer Farbschicht eine mit einer Kennzeichnung versehene kodierte Kodierschicht angeordnet ist. Die Farbschicht weist im sichtbaren Spektralbereich eine reflektierende Eigenschaft auf. In dem Wellenlängenbereich, in dem die Betrachtung der Kennzeichnung der Kodierschicht vorgenommen wird, ist die Farbschicht hingegen transparent, so daß die zur Überprüfung verwandte elektromagnetische Strahlung ungestört durch die Farbschicht hindurchtreten kann. Allerdings ist hier bei der Vornahme der Lackierung der Auftrag einer zusätzlichen Schicht, nämlich der Kodierschicht sowie deren anschließende Kodierung notwendig. Ein derartiges Vorgehen ist umständlich und ergibt beim Nachlackieren, bspw. nach einem Unfall, Komplikationen.

Die Aufgabe der Erfindung ist es, die Kodierung der Lackierung zu vereinfachen. Des weiteren ist es Aufgabe der Erfindung ein Verfahren zur Herstellung einer derartigen Lackierung anzugeben.

Die Aufgabe wird bei einer zugrundegelegten Lackierung mit den kennzeichnenden Merkmalen des Anspruchs 1 bzw. hinsichtlich des Verfahren mit den Verfahrensschritten des Anspruchs 9 gelöst. Die dem lackierenden Lack beigegebenen Pigmente bewirken in ihrer Gesamtheit die Kennzeichnung, indem sie zumindest innerhalb eines vorgegebenen und als Meßbereich verwendeten Wellenlängenbereiches, gezielt das elektromagnetische Spektrum der Lackierung verändernd beeinflussen. Die eigentliche Kennzeichnung ist also das elektromagnetische Spektrum der Lackierung innerhalb des Meßbereiches.

Diese Vorgehensweise ist insbesondere daher vorteilhaft, da das elektromagnetische Spektrum der Lackierung durch die Pigmente hinsichtlich ihrer Lage und der Intensität ihrer Extremas und durch die Art der verwendeten Pigmente (Ort der Extreme) und deren Konzentration (Intensität der Extremas) beeinflußbar ist. Dadurch kann die Kennzeichnung im mannigfaltiger Art aus dem Ort der Extremas und auch durch deren relative Intensität im elektromagnetische Spektrum der Lackierung gebildet sein. Die Ermittlung der Kennzeichnung erfolgt günstigerweise mittels elektromagnetischer Strahlung, die von der Lackierung kommt.

Zweckmäßige Ausgestaltungen der Erfindung sind den Unteransprüchen entnehmbar. Im übrigen wird die Erfindung anhand von in den Figuren dargestellten Ausführungsbeispielen erläutert. Dabei zeigt
- Fig. 1: eine Aufbau einer Lackierung mit mehreren Lackschichten,
- Fig. 2: ein innerhalb eines spektralen Meßbereiches angeordnetes elektromagnetisches Spektrum der Lackschicht mit lumineszierenden Eigenschaften, und
- Fig. 3: ein innerhalb eines spektralen Meßbereichs angeordnetes elektromagnetisches Spektrum der Lackschicht mit absorbierenden Eigenschaften.

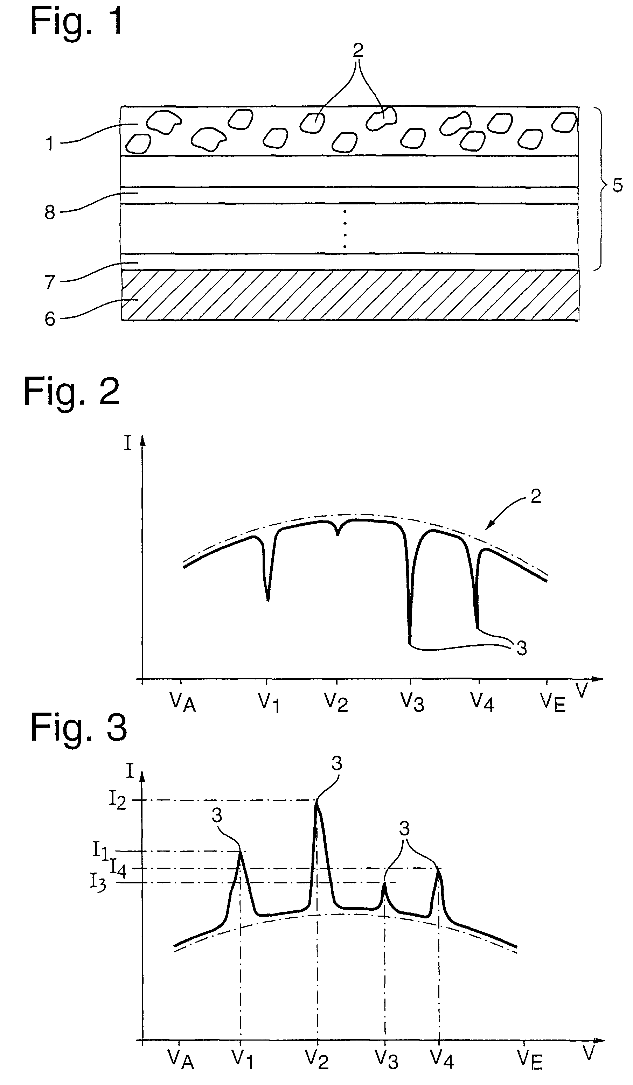

In Figur 1 ist ein Aufbau einer Lackierung 5 einer Metallplatte 6, insbesondere eines Karosseriebleches eines Kraftfahrzeuges dargestellt, die aus mehreren Schichten aufgebaut ist. Im allgemeinen folgen der Metallplatte 6 eine phosphatierte Schicht 7, ggf. ein Schlagschutzschicht, eine Füllerschicht, eine Grundierschicht 8, eine farbgebende Lackschicht und eine abschließende Lackschicht 4 aus einem Klarlack.

Dem Lack der Lackschicht 1 aus Klarlack sind Pigmente 2 beigegeben, die mit ihrem Einfluß auf das elektromagnetische Spektrum 4 der Lackierung 5 die Kennzeichnung des Gegenstands, im vorliegenden Fall des Kraftfahrzeugs, ausbilden.

Der Einfluß der Pigmente 2 äußert sich vorzugsweise darin, daß sie, je nach ihrer stofflichen Art, bei jeweils einer für sie charakteristischen Wellenlänge bzw. Frequenz ein Extremum 3 ihrer optischen Aktivität aufweisen. Bei der jeweiligen optischen Aktivität kann es sich insbesondere um Absorbtion und/oder Lumineszenz handeln. Diese optischen Aktivitäten der unterschiedlichen Pigmente 2 wird das elektromagnetische Spektrum 4 der Lackierung 5 im gesamten meßbar beeinflußt. Dadurch ist es möglich, einem bei der Lackierung verwendeten Lack unterschiedliche Arten von Pigmenten 2 beizugeben, die dann bei den für sie jeweils charakteristischen Frequenzen ein Extremum 3 ausbilden.

Innerhalb eines Meßbereichs bilden die Gesamtzahl der Extremen 3 und deren Lage, also deren Frequenzen bzw. deren Wellenlängen, die meßbare Kennzeichnung aus, wobei die Lage der eines jeweiligen Extremum mit der Art des verwandten Pigments und die Intensität des Extremums mit der Konzentration des jeweiligen Pigments korreliert ist.

Wie in Figur 2 anhand eines Verlaufes eines typischen elektromagnetischen Spektrums 4 innerhalb eines Meßbereichs dargestellt, können die Pigmente 2 zweckmäßigerweise derart gewählt werden, daß sie im Meßbereich allesamt absorbierend sind. Hierbei ist es ggf. von Vorteil, wenn die Absorbtion im sichtbaren Spektralbereich erfolgt, da diese Pigmente 2 gleichzeitig einen Beitrag zur Farbgebung des Gegenstands leisten können.

Für Metallik-Lackierungen kann es sinnvoll sein, Pigmente zu verwenden, die ein metallisches Aussehen haben. Als günstig haben sich hierbei sogenannte III-V-Halbleiter erwiesen, die, wie anhand der Figur 3 dargestellt, im µm-Bereich des elektromagnetischen Spektrums eine luminezierende Eigenschaft aufweisen.

III-V-Halbleiter sind kristalline Halbleitermaterialien, die aus Elementen der dritten und der fünften Hauptgruppe des Periodensystems zusammengesetzt sind. Je nach Anzahl der beteiligten Elemente spricht man von binären (2 Elemente; bspw. GaAs oder InP), ternäre (3 Elemente; bspw. InGaAs oder InGaP), quarternäre (InGaAsP) oder noch höherelementigen Halbleitern.

Eine weitere Möglichkeit der Kennzeichnung ist es, die genannten spektralen Phänomene zu kombinieren; d.h. das elektromagnetische Spektrum weist z.B. sowohl lokale Minimas der Absorbtion (siehe Figur 2) und auch lokale Maximas einer Lumineszens (siehe Figur 3) auf.

## Patentansprüche

1. Lackierung für einen Gegenstand, insbesondere für Kraftfahrzeuge, welche aus vorzugsweise mehreren flächig aufeinander aufgetragenen Schichten gebildet ist, wobei eine Schicht eine Kennzeichnung aufweist, die innerhalb eines spektralen Meßbereichs erkennbar ist,
**dadurch gekennzeichnet,**
daß die Kennzeichnung durch die Einflüsse einer bestimmten Pigmentierung einer Lackschicht (1) eines bei der Lackierung (5) verwendeten Lacks auf das elektromagnetische Spektrum der Lackierung (5) gebildet ist, daß die unterschiedlichen Pigmente (2) der Pigmentierung bei jeweils einer für sie charakteristischen Wellenlänge ein Extremum (3) ihrer optischen Aktivität aufweisen, daß das durch die Pigmente (2) beeinflußte elektromagnetische Spektrum (4) der Lackierung (5) die Kennzeichnung ist.

2. Lackierung nach Anspruch 1,
**dadurch gekennzeichnet,**
daß im spektralen Meßbereich der Kennzeichnung zumindest einige der Pigmente (2) absorbierend sind.

3. Lackierung nach Anspruch 1,
**dadurch gekennzeichnet,**
daß im spektralen Meßbereich der Kennzeichnung zumindest einige der Pigmente (2) lumineszierend sind.

4. Lackierung nach Anspruch 1,
**dadurch gekennzeichnet,**
daß zumindest einige der Pigmente (2) im Bereich der atmosphärischen Fenster, insbesondere im Mikrowellen-Bereich, absorbierend sind.

5. Lackierung nach Anspruch 1,
**dadurch gekennzeichnet,**
daß die Kennzeichnung der Lackierung (5) außer durch die Art bzw. die Zusammensetzung der Pigmente (2) auch durch die Konzentration der jeweiligen Pigmente (2) vorgegebenen ist.

6. Lackierung nach Anspruch 1,
**dadurch gekennzeichnet,**
daß zumindest einige der Pigment (2) aus mehreren Komponenten gebildete Halbleiter, insbesondere III-V-Halbleiter sind.

7. Lackierung nach Anspruch 1,
**dadurch gekennzeichnet,**
daß die zumindest einige der Pigmente (2) binäre und/der ternäre und/oder quarternäre Halbleiter-Kristalle sind.

8. Lackierung nach Anspruch 1,
**dadurch gekennzeichnet,**
daß zumindest einige der Pigmente (2) im sichtbaren Spektralbereich ein metallisches Aussehen aufweisen.

9. Verfahren zur Herstellung einer Lackierung für einen Gegenstand, insbesondere für Kraftfahrzeuge, bei dem vorzugsweise mehrere Lackschichten flächig aufeinander aufgetragenen werden, und bei dem die Lackierung mit einer Kennzeichnung versehen wird, die innerhalb eines spektralen Meßbereichs erkennbar ist,
**dadurch gekennzeichnet,**
daß die Kennzeichnung durch die Einflüsse einer bestimmten Pigmentierung einer Lackschicht (1) eines bei der Lackierung (5) verwendeten Lacks auf das elektromagnetische Spektrum der Lackierung (5) gebildet wird, daß die unterschiedlichen Pigmente (2) der Pigmentierung bei jeweils einer für sie charakteristiWellenlänge ein Extremum (3) ihrer optischen Aktivität aufweisen, und daß das durch die Pigmente (2) innerhalb des spektralen Meßbereiches beeinflußte elektromagnetische Teilspektrum (4) der Lackierung (5) als Kennzeichnung verwandt wird.

10. Verfahren nach Anspruch 9,
**dadurch gekennzeichnet,**
daß zur Pigmentierung Pigmente (2) verwendet werden, die im spektralen Meßbereich der Kennzeichnung absorbieren.

11. Verfahren nach Anspruch 9,
**dadurch gekennzeichnet,**
daß zur Pigmentierung Pigmente (2) verwendet werden, die im spektralen Meßbereich der Kennzeichnung lumineszieren.

12. Verfahren nach Anspruch 9,
**dadurch gekennzeichnet,**
daß zur Pigmentierung Pigmente (2) verwendet werden, die zumindest im Bereich der atmosphärischen Fenster, insbesondere im Mikrowellen-Bereich, absorbieren.

13. Verfahren nach Anspruch 9,
**dadurch gekennzeichnet,**
daß im elektromagnetische Spektrum innerhalb des Meßbereiches bestimmte Wellenlängen hinsichtlich ihrer Intensität hervorgehoben werden.

## Claims

1. A paint finish for an object, in particular for motor vehicles, which preferably consists of several flat coats applied one on top of the other, one layer having an attribute which is discernible within a spectral measurement range,
**characterised in that**
the attribute is constituted by the effects which a specific pigmentation of a varnish coat (1) of a varnish used for the paint finish (5) have on the electromagnetic spectrum of the paint finish (5), in that the different pigments (2) of the pigmentation have an extreme (3) of their optical activity at a wavelength characteristic for each of them, in that the electromagnetic spectrum (4) of the paint finish (5) influenced by the pigments (2) constitutes the attribute.

2. A paint finish as claimed in claim 1,
**characterised in that**
at least some of the pigments (2) are absorbent within the spectral measurement range of the attribute.

3. A paint finish as claimed in claim 1,
**characterised in that**
at least some of the pigments (2) are luminescent within the spectral measurement range of the attribute.

4. A paint finish as claimed in claim 1,
**characterised in that**
at least some of the pigments (2) are absorbent in the range of the atmospheric window, in particular in the microwave range.

5. A paint finish as claimed in claim 1,
**characterised in that**
in addition to the nature and the composition of the pigments (2), the attribute of the paint finish (5) is also determined by the concentration of the pigments (2).

6. A paint finish as claimed in claim 1,
**characterised in that**
at least some of the pigments (2) are multiple-component semiconductors, in particular III-V-semiconductors.

7. A paint finish as claimed in claim 1,
**characterised in that**
of some of these pigments (2), at least some are binary and/or ternary and/or quaternary semiconductor crystals.

8. A paint finish as claimed in claim 1,
**characterised in that**
at least some of the pigments (2) in the visible spectral range have a metallic appearance.

9. A method of producing a paint finish for an object, in particular for motor vehicles, in which several varnish coats preferably are applied flat one on top of the other, and in which an attribute which is discernible within a spectral measurement range is imparted to the paint finish,
**characterised in that**
the attribute is constituted by the effects which a specific pigmentation of a varnish coat (1) of a varnish used for the paint finish (5) have on the electromagnetic spectrum of the paint finish (5), in that the different pigments (2) of the pigmentation have an extreme (3) of their optical activity at a wavelength characteristic for each of them and that the electromagnetic part-spectrum (4) of the paint finish (5) affected by the pigments (2) within the spectral measurement range correlates with the attribute.

10. A method as claimed in claim 9,
**characterised in that**
pigments (2) which are absorbent in the spectral measurement range of the attribute are used for pigmentation purposes.

11. A method as claimed in claim 9,
**characterised in that**
pigments (2) which are luminescent in the spectral measurement range of the attribute are used for pigmentation purposes.

12. A method as claimed in claim 9,
**characterised in that**
pigments (2) which are absorbent at least in the range of the atmospheric window, in particular the microwave range, are used for pigmentation purposes.

13. A method as claimed in claim 9,
**characterised in that**
in the electromagnetic spectrum within the measurement range, specific wavelengths are enhanced in terms of their intensity.

## Revendications

1. Complexe de peinture pour un objet, notamment pour un véhicule automobile, qui est constitué de préférence de plusieurs couches appliquées en surface les unes sur les autres, une couche présentant une caractérisation qui peut être détectée à l'intérieur d'une plage de mesure spectrale,
**caractérisé** en ce que la caractérisation est formée par les influences d'une pigmentation déterminée d'une couche de peinture (1) d'une peinture utilisée pour le complexe de peinture (5), sur le spectre électromagnétique du complexe de peinture (5), en ce que les différents pigments (2) de la pigmentation présentent pour une longueur d'onde qui leur est respectivement caractéristique, un extremum(3) de leur activité optique, et en ce que le spectre électromagnétique (4) du complexe de peinture (5) influencé par les pigments (2), constitue la caractérisation.

2. Complexe de peinture selon la revendication 1, **caractérisé** en ce qu'au moins quelques uns des pigments (2) sont absorbants dans la plage de mesure spectrale.

3. Complexe de peinture selon la revendication 1, **caractérisé** en ce qu'au moins quelques uns des pigments (2) sont luminescents dans la plage de mesure spectrale.

4. Complexe de peinture selon la revendication 1, **caractérisé** en ce qu'au moins quelques uns des pigments (2) sont absorbants dans le domaine des fenêtres atmosphériques, notamment dans domaine des micro-ondes.

5. Complexe de peinture selon la revendication 1, **caractérisé** en ce que la caractérisation du complexe de peinture (5) est prédéfinie, outre par le type et la composition des pigments (2), également par la concentration des pigments (2) considérés.

6. Complexe de peinture selon la revendication 1, **caractérisé** en ce qu'au moins quelques uns des pigments (2) sont des semi-conducteurs formés de plusieurs éléments, notamment des semi-conducteurs III-V.

7. Complexe de peinture selon la revendication 1, **caractérisé** en ce que lesdits au moins quelques uns des pigments (2) sont des cristaux semi-conducteurs binaires et/ou ternaires et/ou quaternaires.

8. Complexe de peinture selon la revendication 1, **caractérisé** en ce que lesdits au moins quelques uns des pigments (2) présentent, dans la plage spectrale visible, un aspect métallique.

9. Procédé de fabrication d'un complexe de peinture pour un objet, notamment pour un véhicule automobile, selon lequel on applique de préférence plusieurs couches de peinture en surface les unes sur les autres, le complexe de peinture étant doté d'une caractérisation qui peut être détectée à l'intérieur d'une plage de mesure spectrale,
**caractérisé** en ce que la caractérisation est formée par les influences d'une pigmentation déterminée d'une couche de peinture (1) d'une peinture utilisée pour le complexe de peinture (5), sur le spectre électromagnétique du complexe de peinture (5), en ce que les différents pigments (2) de la pigmentation présentent pour une longueur d'onde qui leur est respectivement caractéristique, un extremum (3) de leur activité optique, et en ce que le spectre électromagnétique partiel (4) du complexe de peinture (5) influencé par les pigments (2) à l'intérieur de la plage de mesure spectrale, est utilisé en tant que caractérisation.

10. Procédé selon la revendication 9, **caractérisé** en ce que l'on utilise pour la pigmentation, des pigments (2) qui sont absorbants dans la plage de mesure spectrale.

11. Procédé selon la revendication 9, **caractérisé** en ce que l'on utilise pour la pigmentation, des pigments (2) qui sont luminescents dans la plage de mesure spectrale.

12. Procédé selon la revendication 9, **caractérisé** en ce que l'on utilise pour la pigmentation, des pigments (2) qui sont absorbants dans le domaine des fenêtres atmosphériques, notamment dans domaine des micro-ondes.

13. Procédé selon la revendication 9, **caractérisé** en ce que dans le spectre électromagnétique à l'intérieur de la plage de mesure, des longueurs d'ondes déterminées sont accentuées quant à leur intensité.
